# EUROPEAN PATENT SPECIFICATION

(11) **EP 4 296 807 B1**
(45) Date of publication and mention of the grant of the patent: **14.01.2026**
(21) Application number: 23180359.4
(22) Date of filing: 20.06.2023
(51) Int. Cl.: G05B 19/401, G05B 19/418

(54) **METHOD AND MACHINING CENTRE FOR PLATES**
VERFAHREN UND BEARBEITUNGSZENTRUM FÜR PLATTEN
PROCÉDÉ ET CENTRE D'USINAGE POUR PLAQUES

(30) Priority: 23.06.2022 IT 202200013345
(43) Date of publication of application: 27.12.2023
(73) Proprietor: C.M.S. S.p.A., 24019 Zogno (BG) (IT)
(72) Inventor: GHISALBERTI, Oliviero, 24019 Zogno (BG) (IT)
(74) Representative: Luppi Intellectual Property S.r.l.

(56) References cited:
- EP-A1- 2 998 811
- IT-A1- 9 085 548
- IT-A1- MI20 112 076
- US-A1- 2018 044 220

## Description

### Background of the invention

The invention relates to a method and/or a machining centre for machining plates, in particular for machining plates made of marble, granite, stone, glass, quartz, ceramics, brick, agglomerates (of glass and/or ceramic materials and/or quartz and/or synthetic materials and/or still other materials), etc.

Specifically but not exclusively, the invention can be applied to place two or more stiff plates alongside one another so as to make a continuous worktop, for example a worktop of a kitchen.

When forming a worktop by placing two or more stiff plates alongside one another, it is desirable for the thus formed worktop to be devoid of discontinuity and/or irregularity in the joint area of the plates. Nevertheless, the plates used can have thicknesses that are not exactly the same as one another, resulting in the formation of a worktop that is unsuitable because it would have discontinuities that are detectable visually and/or by touch in the joint areas. It is thus necessary, in general, to perform sizing or one or more of the plates used so that the worktop obtained by bringing the plates alongside is regular. IT9085548A1 discloses a sizing machine for semi-finished plate-like objects of marble. IT9085548A1 **discloses a method of machining plates, comprising: providing two plates each comprising two faces opposite to each other, a first lateral edge which joins the two faces and a second lateral edge which joins the two faces, the two lateral edges forming a corner, the two plates being intended to be placed side by side; detecting, for each of the two plates, at least one point of one of the faces; calculating a first sizing value based on said detection; and removing material from one of the faces on the basis of the first sizing value.** EP2998811A1 discloses an electronic-control apparatus for machining workpieces.

The sizing methods of the prior art nevertheless have certain limits and drawbacks. In particular, it is possible to detect sizing imprecisions when the plates to be calibrated not only have different thicknesses, but are also burdened by shape defects (for example bending and/or interruptions) so that the sizing thereof may be imperfect and the worktop obtained by bringing the plates alongside one another may not be acceptable because of irregularities in the joint area of the plates.

### Summary of the invention

One object of the invention is to propose a sizing method that is able to obviate the aforesaid drawback of the prior art.

One object is to form an alternative solution to the problem of calibrating stiff plates intended to form a worktop, in order to avoid the formation of irregularities in the joint area of the plates.

One advantage is to improve the calibrating precision of stiff plates that can be placed alongside one another to form a regular and uniform worktop, for example a worktop of a kitchen.

One advantage is to significantly reduce or completely eliminate any geometric defect in the joint area of the plates, i.e. when the plates are placed alongside one another to form a continuous horizontal worktop.

One advantage is to permit effective sizing also in the event of plates with different thicknesses and with shape defects, in particular defects like for example bending and warping that cause a plate to be not flat.

One advantage is to make available a machining centre that is constructionally simple and cheap to perform sizing of plates.

Such objects and advantages, and still others, are achieved by a method and/or a machining centre according to one or more of the claims set out below.

In one embodiment, a method for machining plates comprises the steps of detecting at least one point on a first face (for example an upper face) of a first plate, at least one point on a second face (for example a lower face) of the first plate, at least one point on a first face (for example an upper face) of a second plate and at least one point on a second face (for example a lower face) of the second plate, and in which material is removed from a portion of the first face and/or from a portion of the second face of at least one of the two plates on the basis of at least one sizing value calculated on the basis of the aforesaid detections of at least four points, so that, when the two plates are placed alongside one another to form a worktop (for example a worktop of a kitchen ), the joint area of the two plates is regular and devoid of defects.

The aforesaid detections can be performed, in particular, by feeler means, for example of mechanical or electronic type. The feeler means can be moved by controlled axes of a numerically controlled machining centre. The feeler means can comprise, in particular, two feelers configured to perform a double detection of two points located on two opposite (upper and lower) faces of a plate, or a single feeler configured to detect two points situated on two opposite (upper and lower) faces of a plate. The aforesaid detections can be used, in particular, to determine the thicknesses of the two plates and to calculate the sizing value as a difference between the two thicknesses.

### Short description of the drawings

The invention can be better understood and implemented with reference to the attached drawings that illustrate one embodiment thereof by way of non-limiting example, in which:

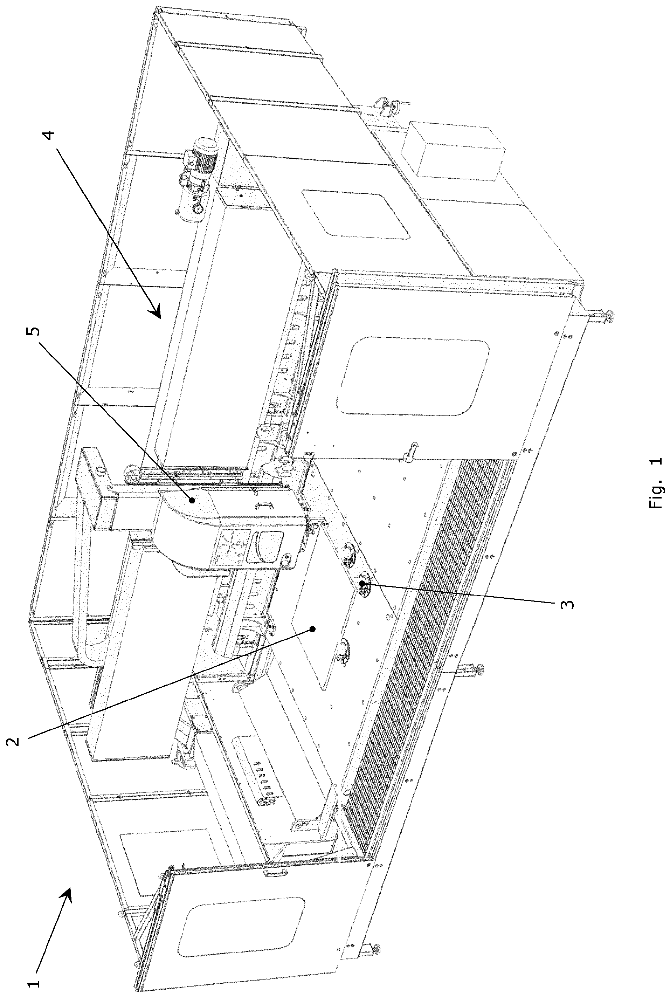

Figure 1 shows a perspective view of one embodiment of a numerically controlled machining centre according to the invention;

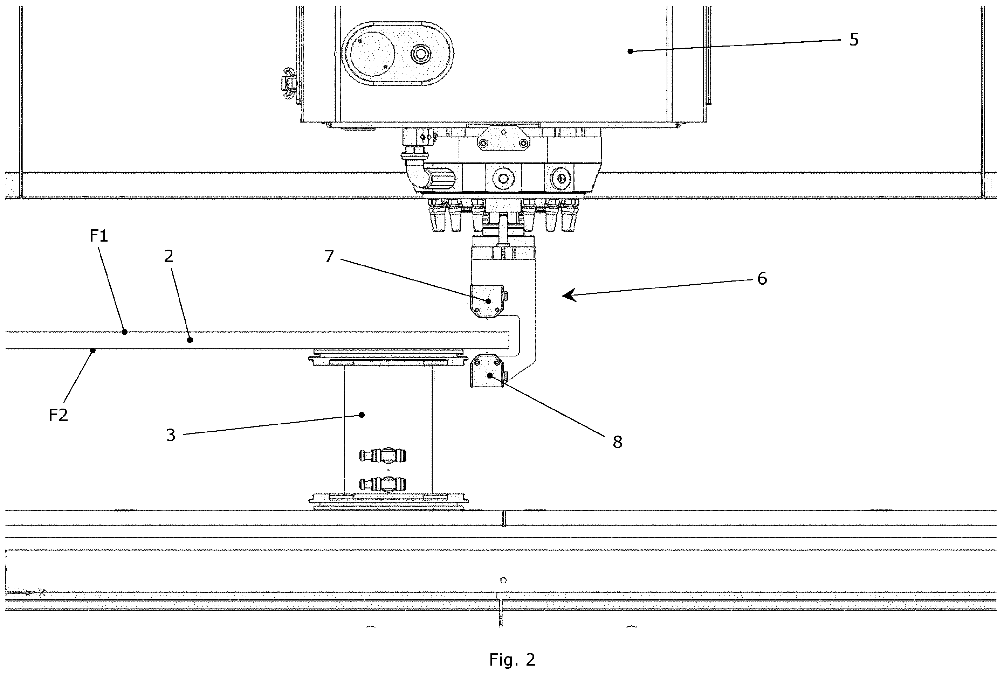

Figure 2 shows a vertically raised view of a machining zone of a plate in the machining centre of Figure 1;
Figure 3 is a diagram that shows, from above, a step of machining the plate performed in the machining zone of Figure 2 and, below, highlights the measurements that are detectable during the aforesaid machining step;
Figure 4 shows a set of plates placed alongside one another to form a worktop of a kitchen, to show better the object of the machining of the plate shown in Figure 3;
Figure 5 shows schematically some steps of the method of machining the plates illustrated in Figure 4;

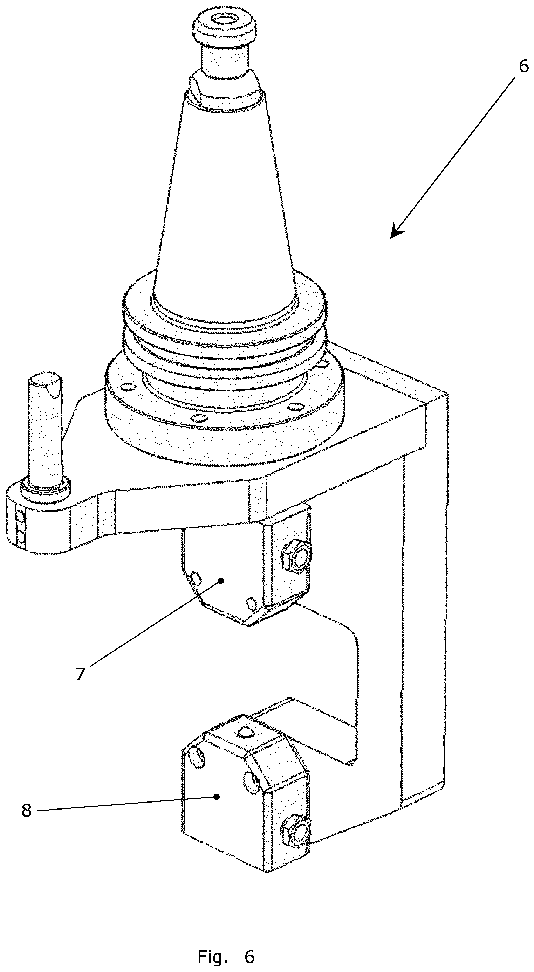

Figure 6 is an enlarged perspective view of a detection unit used in the machining centre of Figures 1 and 2.

### Detailed description

With reference to the aforesaid figures, with 1 a numerically controlled machining centre has been shown overall (with two, three, four, five or more controlled axes), for machining plates, in particular for machining plates made of marble, granite, stone, glass, quartz, ceramics, agglomerates (of glass and/or ceramic materials and/or quartz and/or synthetic materials and/or still other materials), etc. The plates are intended to be placed contiguously alongside one another so as to be a continuous worktop, for example a worktop of a kitchen.

The numerically controlled machining centre 1 comprises at least one support plane configured to receive at least one plate 2. The support plane can comprise, in particular, locking means for locking the plate in an operating position. This locking means can comprise, in particular, sucking means, for example comprising a plurality of suction cups 3.

The numerically controlled machining centre 1 may comprise, in particular, at least one portal 4 arranged above the support plane. The machining centre 1 comprises at least one operating unit 5 supported by the aforesaid portal 4. The operating unit 5 is movable above the support plane along at least two or three controlled axes. The operating unit 5 may be provided, in particular, with two or three controlled linear axes and at least one or two controlled rotation axes (for example, at least one controlled vertical rotation axis). The operating unit 5 may be provided, in particular, with three controlled linear axes X, Y, Z and one, two or more controlled rotation axes.

The operating unit 5 may comprise, in particular, a tool holder configured to carry one or more tools in an interchangeable manner. The operating unit 5 may comprise, in particular, a tool holder spindle.

The operating unit 5 can be operationally associated, in particular, with at least one detection unit 6 coupled removably with the aforesaid tool holder. This detection unit 6 may comprise, in particular, a suitable connection for removable and interchangeable coupling with the aforesaid spindle tool holder. The detection unit 6 can be removed from a tool holder magazine and returned after use to the tool holder magazine (for example in a known manner).

In a further embodiment (not shown), the detection unit 6 can be independent of the operating unit 5 and can be arranged on a slide coupled with the portal 4. In this case, the detection unit can be provided with three controlled linear axes X, Y, Z and one, two or more controlled rotation axes.

The detection unit 6 may comprise, in particular, at least one upper feeler 7 that is able to operate on a first face (for example an upper face) of each plate 2 and at least one lower feeler 8 that is able to operate on a second face (for example a lower face) of each plate opposite the first face. The detection unit 6 may comprise, in particular, a structure (for example a C-shaped structure) that carries the upper feeler 7 and the lower feeler 8. The structure can be, in particular, rotatable around a vertical rotation axis (for example one of the controlled axes of the numerically controlled machining centre 1). The upper feeler 7 and the lower feeler 8 can be, in particular, mechanical feelers, although it is possible to use other types of feelers, like for example electronic feelers comprising optical, or acoustic, or magnetic, or capacitive or inductive sensors.

In a further embodiment, the detection unit may comprise a single feeler that can be moved by the controlled axes operationally associated with the operating unit 5, or can be moved by the controlled axes thereof (independent of the controlled axes associated with the operating unit 5). The aforesaid single feeler can be so moved as to perform at least one feeler on the first (upper) face and at least feeler on the second (lower) face.

The numerically controlled machining centre 1 comprises programmable electronic control means (for example, an electronic processor) configured to control the numerically controlled machining centre 1. The control means may be configured, in particular, to control the operating unit 5 (or the aforesaid slide that carries the feeler means and moves the feeler means along controlled axes) so as to carry out a machining method to calibrate the plates.

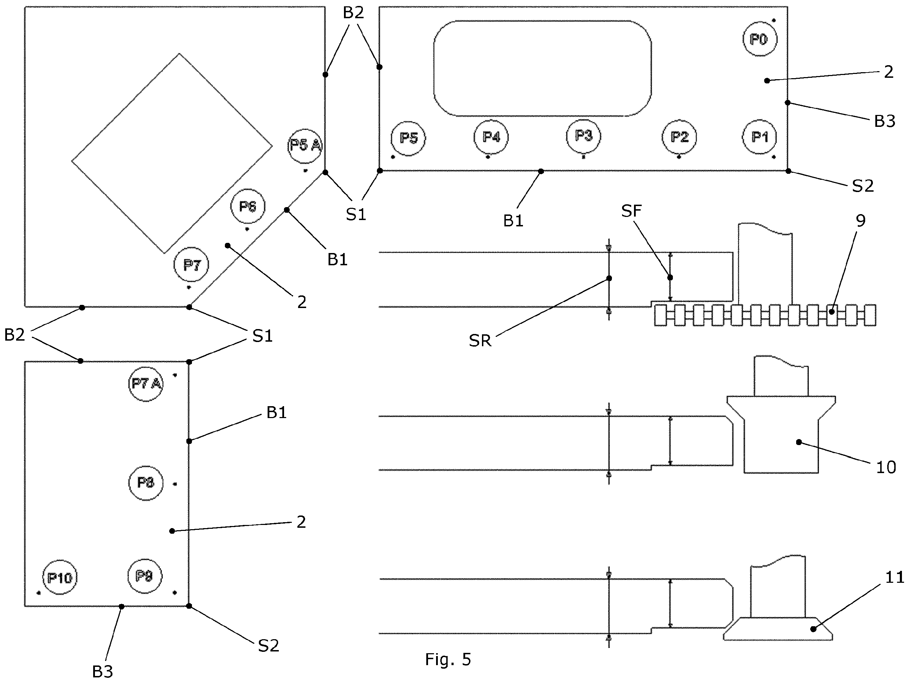

In one specific and non-limiting embodiment, this machining method comprises the step of coupling the detection unit 6 with the operating unit 5 (or with the aforesaid slide) and performing a series of detections on two or more suitably arranged plates 2, for example sequentially and one after the other, on the horizontal support plane. Each detection by the upper feeler 7 and the lower feeler 8 (or by a single feeler provided with suitable movement) detects at least one point on the upper face and at least one point on the lower face of the plate. Figure 5 shows, merely by way of example, six points P0, P1, P2, P3, P4, P5 detected on the upper face of a first plate, three points P5A, P6, P7 detected on the upper face of a second plate, four points P7A, P8, P9, P10 detected on the upper face of a third plate. For each of the points P0, P1, ..., P10 detected on the upper face by the upper feeler 7, there are corresponding points detected on the lower face by the lower feeler 8. Each pair of detections (performable also by a single feeler) can be used to determine a plate thickness at the zone of performance of the detections.

In order to perform the detections, in particular detections that are suitable for knowing the vertical position of each detected point (both on the upper face and on the lower face of the plate 2), the detection unit 6 can be moved in a vertical direction by the operating unit 5 by the numeric control (movement along the axis Z). The detection unit 6 can be further moved in a horizontal direction by the operating unit 5 by the numeric control (movements along the axis X and/or along the axis Y). The detection unit 6 can be further rotated around a vertical axis by the numeric control to facilitate measuring along two or more faces of the perimeter of the plate.

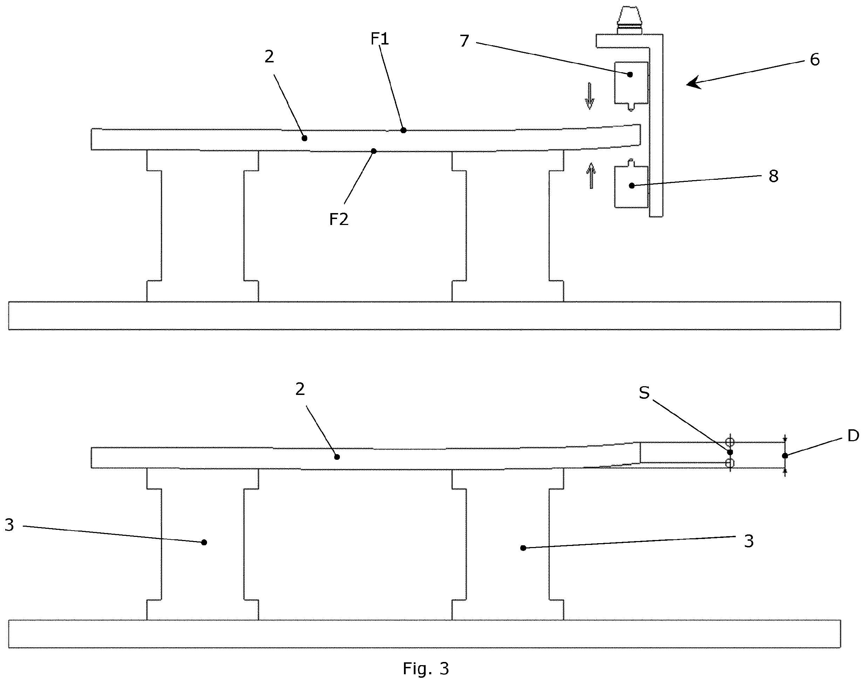

It is noted that detecting points both on the upper face and on the lower face of the plate enables at least one actual thickness S of the plate to be determined. This thickness S, in the event of a shape defect of the plate 2 (for example a curvature of the plate, as visible in Figure 3), might not correspond to the distance D between the upper face of the plate and the support plane of the plate. The aforesaid detection of at least one pair of points on the opposite faces of the plate thus enables possible shape defects (curvature and/or disconnections) of the plate to be considered.

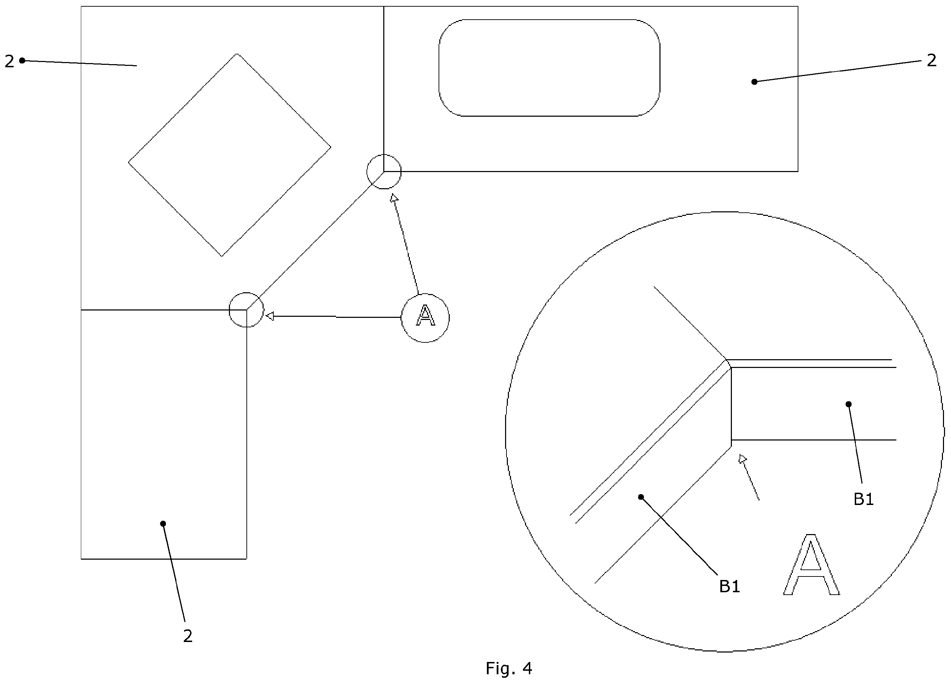

The three plates 2 have to then be placed alongside one another (see Figure 4) so as to make the corners near points P5 and P5A of the first plate and of the second plate mate with the corners near points P7 and P7A of the second plate and of the third plate. The sizing method in question must prevent the formation of irregularities at the joint area of the corners, like for example, the step visible in the enlargement of Figure 4.

For this purpose, the knowledge of the different thicknesses (at points P0, P1, ..., P10) calculated for each plate is so used to determine the sizing values that all the plates, after sizing, have substantially the same thickness value SF in the entire front zone, i.e. the zone that will be visible to the user once the plates will be placed alongside one another to form the worktop. Each sizing value can be, in particular, equal to a difference of thicknesses, i.e. the difference between each value SR of the real thickness determined on the basis of the detections and the value SF of the calibrated thickness that at the end of sizing must be the same for all the plates.

Sizing may comprise, in particular, a material removal task, for example removal by milling (see Figure 5), on the lower face of the plates that need to be calibrated. The tool used for this removal of material, for example a milling unit 9 with vertical axis, can be carried, in particular, by the operating unit 5 that carries the detection unit 6. It is further possible to perform chamfering tasks on the (upper and lower) horizontal corners of the plates, for example by milling units 10 and 11, each of which can be carried, in particular, by the operating unit 5 that carries the detection unit 6.

As has been seen from the specific embodiment disclosed above, the machining method can comprise the step a) of providing two or more plates each of which comprises a first face F1, a second face F2 opposite the first face F1 and a first side edge B1 that joins the first face F1 to the second face F2. The first side edge B1 is the side edge located frontally when the plate is implemented to form a worktop (for example of a kitchen). Each plate comprises at least one second side edge B2 that joins the first face to the second face.

The first side edge B1 and the second side edge B2 form a first corner S1 (a corner that is transverse to the aforesaid faces, in particular a vertical corner, for example the edge highlighted in the enlargement of Figure 4, i.e. the edge near the upper point P5, or the edge near the upper point P5A, or the edge near the upper point P7, or the edge near the upper point P7A when the plates 2 will be placed alongside one another such that the first (upper) faces of the plates 2 define a continuous horizontal flat surface of the worktop by making the respective first corners mate with one another (P5 with P5A and/or P7 with P7A).

This machining method may comprise the step b) of detecting, for each of the aforesaid plates 2, at least one point (P5, or P5A, or P7, or P7A) of the first (upper) face near the first corner S1 and at least one point (opposite P5, P5A, P7, P7A) of the second (lower) point near the first corner S1.

This machining method may comprise the step c) of calculating a first sizing value (for example the difference in thicknesses) on the basis of the detection of the aforesaid four points (two on the upper face of two plates and two on the lower face of the plates) in the detecting step b). This machining method can comprise the step d) of removing the material from a portion of the first face F1 and/or of the second face F2 (in these specific embodiments, only of the second face F2) of at least one of the aforesaid plates 2 on the basis of the calculated first sizing value.

The step b) of detecting points near the first corner S1 may performed, in particular, by the detection unit 6 with at least the upper feeler 7 operating on the first face of each plate 2 and at least the lower feeler 8 operating on the second point on each plate 2.

The C-shaped structure is rotatable around a vertical rotation axis to facilitate the mobility of the feeler means around the various faces of each plate.

This machining method may comprise, in particular, the step of detecting, for each plate 2 and for each of the first and second (i.e. upper and lower) faces of the respective plate, at least one intermediate point (for example P2, P3, P4 for the first plate of the embodiment of Figure 5, P6 for the second intermediate plate, P8 for the third and last plate) that is further from the first corner than the aforesaid point (P5, or P5A, or P7, or P7A) near the first corner.

This machining method may comprise, in particular, for each plate 2, the step of calculating at least one second sizing value (for example a difference of thicknesses) on the basis of the detection of the aforesaid intermediate points. This machining method may comprise, in particular, the step of removing material from at least one portion of the second face of a plate on the basis of the aforesaid second sizing value.

This machining method may comprise, in particular, the step of detecting, for each plate 2 and for each of the first and second (i.e. upper and lower) faces , at least one point (for example P1, or P9) near a second corner S2 (transverse to the aforesaid faces, in particular a vertical corner) formed by the respective first side edge B1 and by a third side edge B3 (in the embodiment of Figure 5 each of the two end side edges of the worktop of the kitchen obtained by moving plates 2 against one another) that joins the respective first face with the respective second face.

This machining method may comprise, in particular, for each plate 2, the step of calculating at least one third sizing value (for example a difference of thicknesses) on the basis of the detection of the aforesaid points near the second corner S2 and the step of removing material from at least one portion of the second face on the basis of the third sizing value (in particular, as has been seen in the specific embodiment disclosed before, in order to obtain a uniform thickness SF for the entire worktop).

This machining method may comprise, in particular, the step of detecting, for each of the aforesaid first and second faces, of at least one plate 2, at least one point (for example P0 for the first plate of the embodiment of Figure 5, P10 for the third and last plate) near a third corner (that is vertical and/or transverse to the aforesaid faces) defined by the aforesaid third side edge B3 on the side opposite the aforesaid second corner S2.

This machining method may comprise, in particular, the step of calculating at least one fourth sizing value (for example, a difference of thicknesses) on the basis of the detection of the aforesaid points near the third corner and the step of removing material from at least one portion of the second plate face on the basis of the fourth sizing value.

As said, the first sizing value may comprise, in particular, a thickness of material to be removed on a portion of the lower face of at least one of the plates near the first corner S1. This thickness can be equal to a difference between the thicknesses of the two plates near the respective first corners, such thicknesses being calculated on the basis of the detection of the aforesaid points near the first corner. Also the second sizing value (just like the third sizing value and the fourth sizing value) may comprise, in particular, a thickness of material to be removed on a portion in an intermediate zone of the lower face of the aforesaid plate. In this manner, removing material from the lower plate face can be performed without leaving steps and with a constant thickness SF. Also in this case, the thickness to be removed can be the same as or different from the thicknesses of the two plates, such thicknesses being calculated on the basis of the detection of the aforesaid intermediate points.

This machining method may comprise, in particular, for each plate 2, the step of arranging the plate on a horizontal support plane. The arrangement of the plates 2 can occur, in particular, sequentially, i.e. one plate after the other. It is possible to provide the same support plane for two or more plates. The aforesaid step b) of detecting the points can be performed, in particular, when each plate 2 is arranged on the support plane. It is possible to provide for the plate 2 to be locked on the support plane by the sucking means (suction cups 3).

## Claims

1. Method of machining plates, comprising the following steps
a) providing two or more plates (2) each of which comprises a first face (F1), a second face (F2) opposite to said first face, a first lateral edge (B1) which joins said first face with said second face and a second lateral edge (B2) which joins said first face with said second face, said first lateral edge and said second lateral edge forming a first corner (S1),
said two or more plates (2) being intended to be placed side by side so that the first faces of the plates define a continuous horizontal flat surface of a worktop by matching the respective first corners together;
b) detecting, for each of said two or more plates (2), at least one point (P5; P5A; P7; P7A) of said first face (F1) close to the first corner and at least one point on said second face (F2) close to the first corner;
c) calculating a first sizing value based on the detection of said at least four points in said detection step;
d) removing material from said second face and/or from said first face of at least one of said two or more plates (2) on the basis of said first sizing value so that, when said two or more plates (2) will be placed side by side, a joint area of the plates is regular by matching the respective first corners together.

2. Method according to claim 1, wherein said step b) of detecting points close to the first corner (S1) is performed by a detection unit (6) with at least one upper feeler (7) operating on said first face of each plate and at least one lower feeler (8) operating on said second face of each plate.

3. Method according to claim 2, wherein said detection unit (6) comprises a structure which carries said upper feeler (7) and said lower feeler (8) and which is rotatable about a vertical rotation axis.

4. Method according to claim 2 or 3, wherein said upper feeler (7) and said lower feeler (8) are mechanical feelers.

5. Method according to claim 1, wherein said step b) of detecting points close to the first corner (S1) is performed by a detection unit with a feeler moved by two or more controlled axes associated with an operating unit or by two or more controlled axes associated with said feeler and independent with respect to other controlled axes associated with an operating group.

6. Method according to any one of the preceding claims, comprising the step of detecting, for each of said two or more plates (2) and for each of said first face and second face, at least one intermediate point (P2; P3; P4 ; P6; P8) which is further away from the first corner than said point close to the first corner; said method comprising, for each of said two or more plates (2), the step of calculating at least one second sizing value based on the detection of said intermediate points and the step of removing material from said first face and/or second face based on said at least one second sizing value.

7. Method according to any one of the preceding claims, comprising the step of detecting, for each of said two or more plates (2) and for each of said first face and second face, at least one point (P1; P9) close to a second corner (S2) formed by the respective first lateral edge (B1) and by a third lateral edge (B3) which joins the respective first face with the respective second face; said method comprising, for each of said two or more plates (2), the step of calculating at least one third sizing value based on the detection of said points close to the second corner (S2) and the step of removing material from said first face and/or second face based on said at least one third sizing value.

8. Method according to claim 7, comprising the step of detecting, for each of said first face and second face of at least one of said two or more plates (2), at least one point (P0; P10) close to a third corner defined by said third lateral edge (B3) on the opposite side with respect to said second corner (S2); said method comprising, for each of said two or more plates (2), the step of calculating at least one fourth sizing value based on the detection of said points close to the third corner and the step of removing material from said first and/or second face on the basis of said at least one fourth sizing value.

9. Method according to any one of the preceding claims, comprising the step of arranging each plate (2) on a horizontal support plane, in particular on the same support plane, and of performing said step b) of detecting when each plate is arranged on the support plane, wherein said step of arranging comprises locking each plate (2) by means of suction means.

10. Method according to any one of the preceding claims, wherein said first sizing value comprises a thickness of material to be removed equal to a difference between the thicknesses of the two plates calculated on the basis of the detection of said points close to the first corner in said step b) of detecting.

11. CNC machining center comprising at least one support surface on which to place at least one plate, a portal (4) arranged above said support surface, at least one operating unit (5) carried by said portal and movable above said support plane along at least three controlled axes, in particular at least two or three controlled linear axes and at least one or two controlled rotation axes, at least one tool holder carried by said operating unit (5), at least one detection unit (6) removably coupled with said tool holder or with a slide coupled with said portal (4), and electronic control means configured to control said operating unit and/or said slide so as to perform a machining method according to any one of the preceding claims.

## Patentansprüche

1. Verfahren zum Bearbeiten von Platten, umfassend die folgenden Schritte
a) Bereitstellen von zwei oder mehr Platten (2), die jeweils eine erste Fläche (F1), eine der ersten Fläche gegenüberliegende zweite Fläche (F2), eine erste Seitenkante (B1), die die erste Fläche mit der zweiten Fläche verbindet, und eine zweite Seitenkante (B2), die die erste Fläche mit der zweiten Fläche verbindet, umfasst, wobei die erste Seitenkante und die zweite Seitenkante eine erste Ecke (S1) ausbilden,
wobei die zwei oder mehr Platten (2) dazu bestimmt sind, nebeneinander platziert zu werden, sodass die ersten Flächen der Platten eine durchgehende horizontale flache Oberfläche einer Arbeitsplatte durch Zusammenfügen der jeweiligen ersten Ecken ausbilden;
b) Erfassen, für jede von zwei oder mehr Platten (2), von mindestens einem Punkt (P5; P5A; P7; P7A) der ersten Fläche (F1) nahe der ersten Ecke und mindestens einem Punkt auf der zweiten Fläche (F2) nahe der ersten Ecke;
c) Berechnen eines ersten Größenwerts basierend auf der Erfassung der mindestens vier Punkte in dem Erfassungsschritt;
d) Entfernen von Material von der zweiten Fläche und/oder von der ersten Fläche mindestens einer der zwei oder mehr Platten (2) auf der Basis des ersten Größenwerts, sodass, wenn die zwei oder mehr Platten (2) nebeneinander platziert werden, ein Verbindungsbereich der Platten durch Zusammenfügen der jeweiligen ersten Ecken regelmäßig ist.

2. Verfahren nach Anspruch 1, wobei der Schritt b) zum Erfassen von Punkten nahe der ersten Ecke (S1) durch eine Erfassungseinheit (6) mit mindestens einem oberen Fühler (7), der auf der ersten Seite jeder Platte in Betrieb ist, und mindestens einem unteren Fühler (8), der auf der zweiten Seite jeder Platte in Betrieb ist, durchgeführt wird.

3. Verfahren nach Anspruch 2, wobei die Erfassungseinheit (6) eine Struktur umfasst, die den oberen Fühler (7) und den unteren Fühler (8) trägt und die um eine vertikale Drehachse drehbar ist.

4. Verfahren nach Anspruch 2 oder 3, wobei der obere Fühler (7) und der untere Fühler (8) mechanische Fühler sind.

5. Verfahren nach Anspruch 1, wobei der Schritt b) zum Erfassen von Punkten nahe der ersten Ecke (S1) durch eine Erfassungseinheit mit einem Fühler durchgeführt wird, der durch zwei oder mehr gesteuerte Achsen, die einer Betriebseinheit zugeordnet sind, oder durch zwei oder mehr gesteuerte Achsen bewegt wird, die dem Fühler zugeordnet und unabhängig von anderen gesteuerten Achsen sind, die einer Betriebsgruppe zugeordnet sind.

6. Verfahren nach einem der vorstehenden Ansprüche, umfassend den Schritt zum Erfassen, für jede von zwei oder mehr Platten (2) und für jede der ersten Fläche und der zweiten Fläche, von mindestens einem Zwischenpunkt (P2; P3; P4; P6; P8), der weiter von der ersten Ecke als der Punkt nahe der ersten Ecke entfernt ist; das Verfahren umfassend, für jede der zwei oder mehr Platten (2), den Schritt zum Berechnen mindestens eines zweiten Größenwerts basierend auf der Erfassung der Zwischenpunkte und den Schritt zum Entfernen von Material von der ersten Fläche und/oder der zweiten Fläche basierend auf mindestens einem zweiten Größenwert.

7. Verfahren nach einem der vorstehenden Ansprüche, umfassend den Schritt zum Erfassen, für jede der zwei oder mehr Platten (2) und für jede der ersten Fläche und der zweiten Fläche, von mindestens einem Punkt (P1; P9) nahe einer zweiten Ecke (S2), die durch die jeweilige erste Seitenkante (B1) und durch eine dritte Seitenkante (B3) ausgebildet wird, die die jeweilige erste Fläche mit der jeweiligen zweiten Fläche verbindet; das Verfahren umfassend, für jede der zwei oder mehr Platten (2), den Schritt zum Berechnen mindestens eines dritten Größenwerts basierend auf der Erfassung der Punkte nahe der zweiten Ecke (S2) und den Schritt zum Entfernen von Material von der ersten Fläche und/oder der zweiten Fläche basierend auf dem mindestens einen dritten Größenwert.

8. Verfahren nach Anspruch 7, umfassend den Schritt zum Erfassen, für jeweils die erste Fläche und die zweite Fläche mindestens einer der zwei oder mehr Platten (2), von jeweils mindestens einem Punkt (P0; P10) nahe einer dritten Ecke, die durch die dritte Seitenkante (B3) auf der gegenüberliegenden Seite in Bezug auf die zweite Ecke (S2) definiert ist; das Verfahren umfassend, für jede der zwei oder mehr Platten (2), den Schritt zum Berechnen mindestens eines vierten Größenwerts basierend auf der Erfassung der Punkte nahe der dritten Ecke und den Schritt zum Entfernen von Material von der ersten und/oder der zweiten Fläche auf der Basis des mindestens einen vierten Größenwerts.

9. Verfahren nach einem der vorstehenden Ansprüche, umfassend den Schritt zum Anordnen jeder Platte (2) auf einer horizontalen Trägerebene, insbesondere auf derselben Trägerebene, und zum Durchführen des Schritts b) zum Erfassen, wann jede Platte auf der Trägerebene angeordnet ist, wobei der Schritt zum Anordnen ein Festhalten jeder Platte (2) mittels Saugmitteln umfasst.

10. Verfahren nach einem der vorstehenden Ansprüche, wobei der erste Größenbestimmungswert eine Dicke des zu entfernenden Materials umfasst, die gleich einer Differenz zwischen den Dicken der zwei Platten ist, die auf der Basis der Erfassung der Punkte nahe der ersten Ecke in dem Erfassungsschritt b) berechnet wird.

11. CNC-Bearbeitungszentrum, umfassend mindestens eine Auflageoberfläche, auf der mindestens eine Platte platziert werden soll, ein Portal (4), das über der Auflageoberfläche angeordnet ist, mindestens eine Arbeitseinheit (5), die durch das Portal getragen wird und über der Auflageoberfläche entlang mindestens dreier gesteuerter Achsen, insbesondere mindestens zwei oder drei gesteuerter Linearachsen und mindestens einer oder zwei gesteuerter Drehachsen bewegbar ist, mindestens einen Werkzeughalter, der durch die Arbeitseinheit (5) getragen wird, mindestens eine Erfassungseinheit (6), die mit dem Werkzeughalter oder mit einem Schlitten, der mit dem Portal (4) gekoppelt ist, gekoppelt ist, und elektronische Steuermittel, die konfiguriert sind, um die Betriebseinheit und/oder den Schlitten zu steuern, um ein Bearbeitungsverfahren nach einem der vorstehenden Ansprüche durchzuführen.

## Revendications

1. Procédé d'usinage de plaques, comprenant les étapes suivantes
a) fourniture de deux plaques (2) ou plus, chacune desquelles comprend une première face (F1), une seconde face (F2) opposée à ladite première face, un premier bord latéral (B1) qui relie ladite première face à ladite seconde face et un deuxième bord latéral (B2) qui relie ladite première face à ladite seconde face, ledit premier bord latéral et ledit deuxième bord latéral formant un premier coin (S1),
lesdites deux plaques (2) ou plus étant destinées à être placées côte-à-côte de sorte que les premières faces des plaques définissent une surface plane horizontale continue d'un plan de travail en faisant correspondre les premiers coins respectifs;
b) détection, pour chacune desdites deux plaques (2) ou plus, d'au moins un point (P5; P5A; P7; P7A) de ladite première face (F1) proche du premier coin et d'au moins un point sur ladite seconde face (F2) proche du premier coin;
c) calcul d'une première valeur de dimensionnement sur la base de la détection desdits au moins quatre points lors de ladite étape de détection;
d) enlèvement de matière de ladite seconde face et/ou de ladite première face d'au moins une desdites deux plaques (2) ou plus sur la base de ladite première valeur de dimensionnement de sorte que, lorsque lesdites deux plaques (2) ou plus sont placées côte-à-côte, une zone de jointure des plaques est régulière en faisant correspondre les premiers coins respectifs.

2. Procédé selon la revendication 1, dans lequel ladite étape b) de détection de points proches du premier coin (S1) est réalisée par une unité de détection (6) avec au moins un palpeur supérieur (7) opérant sur ladite première face de chaque plaque et au moins un palpeur inférieur (8) opérant sur ladite seconde face de chaque plaque.

3. Procédé selon la revendication 2, dans lequel ladite unité de détection (6) comprend une structure qui soutient ledit palpeur supérieur (7) et ledit palpeur inférieur (8) et qui est rotative autour d'un axe de rotation vertical.

4. Procédé selon la revendication 2 ou 3, dans lequel ledit palpeur supérieur (7) et ledit palpeur inférieur (8) sont des palpeurs mécaniques.

5. Procédé selon la revendication 1, dans lequel ladite étape b) de détection de points proches du premier coin (S1) est réalisée par une unité de détection avec un palpeur déplacé par deux axes commandés ou plus associés à une unité d'opération ou par deux axes commandés ou plus associés audit palpeur et indépendants par rapport à d'autres axes commandés associés à une unité d'opération.

6. Procédé selon l'une quelconque des revendications précédentes, comprenant l'étape de détection, pour chacune desdites deux plaques (2) ou plus et pour chacune desdites première face et seconde face, d'au moins un point intermédiaire (P2; P3; P4; P6; P8) qui est plus éloigné du premier coin que ledit point proche du premier coin ; ledit procédé comprenant, pour chacune desdites deux plaques (2) ou plus, l'étape de calcul d'au moins une deuxième valeur de dimensionnement sur la base de la détection desdits points intermédiaires et l'étape d'enlèvement de matière de ladite première face et/ou de ladite seconde face sur la base de ladite au moins une deuxième valeur de dimensionnement.

7. Procédé selon l'une quelconque des revendications précédentes, comprenant l'étape de détection, pour chacune desdites deux plaques (2) ou plus et pour chacune desdites première face et seconde face, d'au moins un point (P1; P9) proche d'un second coin (S2) formé par le premier bord latéral (B1) respectif et par un troisième bord latéral (B3) qui relie la première face respective à la seconde face respective ; ledit procédé comprenant, pour chacune desdites deux plaques (2) ou plus, l'étape de calcul d'au moins une troisième valeur de dimensionnement sur la base de la détection desdits points proches du second coin (S2) et l'étape d'enlèvement de matière desdites première face et/ou seconde face sur la base de ladite au moins une troisième valeur de dimensionnement.

8. Procédé selon la revendication 7, comprenant l'étape de détection, pour chacune desdites première face et seconde face d'au moins une desdites deux plaques (2) ou plus, d'au moins un point (P0; P10) proche d'un troisième coin défini par ledit troisième bord latéral (B3) sur le côté opposé par rapport audit second coin (S2); ledit procédé comprenant, pour chacune desdites deux plaques (2) ou plus, l'étape de calcul d'au moins une quatrième valeur de dimensionnement sur la base de la détection desdits points proches du troisième coin et l'étape d'enlèvement de matière desdites première et/ou seconde face sur la base de ladite au moins une quatrième valeur de dimensionnement.

9. Procédé selon l'une quelconque des revendications précédentes, comprenant l'étape de disposition de chaque plaque (2) sur un plan de support horizontal, en particulier sur le même plan de support, et de réalisation de ladite étape b) de détection lorsque chaque plaque est disposée sur le plan de support, dans lequel ladite étape de disposition comprend le verrouillage de chaque plaque (2) à l'aide de moyens d'aspiration.

10. Procédé selon l'une quelconque des revendications précédentes, dans lequel ladite première valeur de dimensionnement comprend une épaisseur de matière à enlever égale à une différence entre les épaisseurs des deux plaques calculées sur la base de la détection desdits points proches du premier coin à ladite étape b) de détection.

11. Centre d'usinage CNO comprenant au moins une surface de support sur laquelle placer au moins une plaque, un portique (4) disposé au-dessus de ladite surface de support, au moins une unité d'opération (5) soutenue par ledit portique et mobile au-dessus dudit plan de support le long d'au moins trois axes commandés, en particulier au moins deux ou trois axes linéaires commandés et au moins un ou deux axes de rotation commandés, au moins un porte-outil soutenu par ladite unité d'opération (5), au moins une unité de détection (6) couplée de manière amovible audit porte-outil ou à un coulisseau accouplé audit portique (4), et des moyens de commande électroniques configurés pour commander ladite unité d'opération et/ou ledit coulisseau afin de réaliser un procédé d'usinage selon l'une quelconque des revendications précédentes.
